(19) Europäisches Patentamt

European Patent Office

Office européen des brevets

(11) **EP 1 089 420 A1**

(12) **EUROPEAN PATENT APPLICATION**

(43) Date of publication:
04.04.2001 Bulletin 2001/14

(51) Int. Cl.[7]: **H02M 3/335**

(21) Application number: **00118682.4**

(22) Date of filing: **29.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.09.1999 JP 24870499**
**02.07.2000 JP 2000165719**

(71) Applicant:
**Yokogawa Electric Corporation**
**Tokyo 180-8750 (JP)**

(72) Inventor:
**Kato, Dai,**
**c/o Yokogawa Electric Corporation**
**Musashino-shi, Tokyo 180-8750 (JP)**

(74) Representative:
**Henkel, Feiler, Hänzel**
**Möhlstrasse 37**
**81675 München (DE)**

(54) **Switching power supply**

(57)     It is a general object of the present invention to provide a switching power supply having a circuit configuration that saves power when the switching power supply is under a small to no load.

The present invention relates to a switching power supply comprising:

a transformer including a primary winding to which a dc current is applied by turning on and off a switching device and a secondary winding for supplying the induced energy to a load;
an on-state control circuit for turning on the switching device by means of a voltage signal induced at the secondary winding; and

an off-state control circuit for turning off the switching device by producing a current control signal from the output voltage of the secondary winding and a reference voltage, and comparing the current control signal with a current flowing through the primary winding by means of a comparator,
wherein the switching power supply is further provided with a delay circuit for prolonging the time at which the switching device makes an off-to-on transition.

FIG. 4

EP 1 089 420 A1

## Description

## BACKGROUND OF THE INVENTION

### Field of the Invention

The present invention relates to a switching power supply used as a power source for different kinds of electronic equipment. More specifically, the invention relates to a switching power supply improved so as to save power under a small to no load.

### Description of the Prior Art

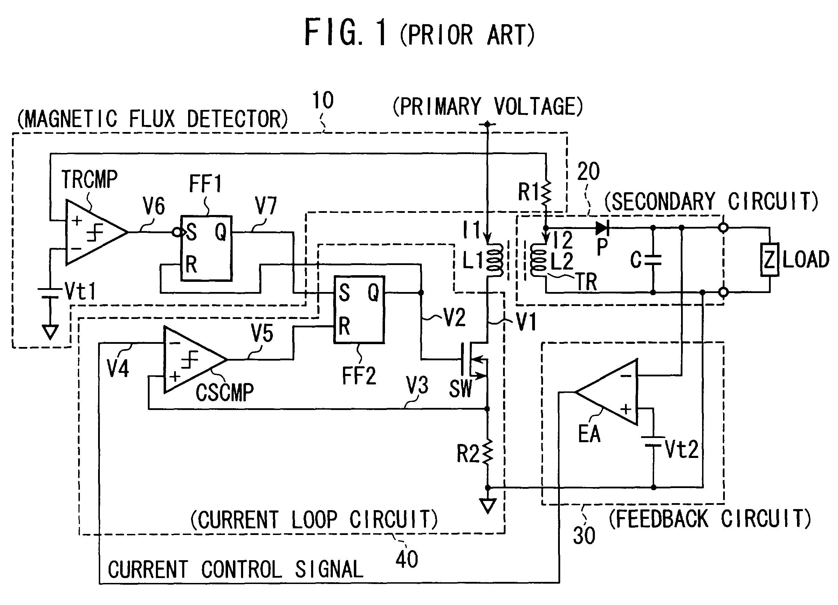

As shown in FIG. 1, a switching power supply of the prior art comprises a transformer TR including a primary winding L1 and a secondary winding L2, a magnetic flux detector 10, a current loop circuit 40 for controlling a dc current applied to the primary winding L1, a feedback circuit 30 for detecting and feeding an output voltage supplied to a load Z on the secondary winding L2 side back to the current loop circuit 40, and a secondary circuit 20 for supplying a voltage from the secondary winding L2 to the load Z.

The magnetic flux detector 10 includes a first comparator TRCMP, wherein magnetic flux energy accumulated in the transformer TR is detected as a voltage signal by means of a current I2 flowing through the secondary winding L2 and a resistor R1, and to which the voltage signal and a reference voltage Vt1 are applied, and a first flip-flop circuit FF1 wherein the output signal v6 of the first comparator TRCMP is input to the set input terminal S, a gate signal V2 for a switching device SW is input to the reset input terminal R, and an output signal V7 from the output terminal Q of the first flip-flop circuit FF1 is connected to the set input terminal S of a second flip-flop circuit FF2 which is discussed later.

The secondary circuit 20 includes the secondary winding L2 of the transformer TR, a rectifying diode D connected in series to the secondary winding L2, a capacitor C connected in parallel to the secondary winding L2, and the load Z connected in parallel to the capacitor C.

The feedback circuit 30 is located on the output load side, where a voltage applied to the load Z and a reference voltage Vt2 are input to the feedback circuit 30 in order to negatively feed back a current control signal V4 from an error amplifier EA, which outputs the current control signal V4, to a second comparator CSCMP so that a given output voltage is maintained.

The current loop circuit 40 includes the second comparator CSCMP wherein a current I1 flowing through the primary winding L1 is detected by means of a resistor R2 and the resulting voltage signal V3 is input to the non-inverting input terminal and the current control signal V4 from the feedback circuit 30 is input to the inverting input terminal, the second flip-flop circuit FF2 wherein the output signal V5 of the second comparator CSCMP is input to the reset input terminal R, the output signal V7 of the first flip-flop circuit FF1 is input to the set input terminal S, and the output signal V2 of the output terminal Q is input to the gate of the switching device SW, and the switching device SW that is turned on and off by means of the output signal V2 of the second flip-flop circuit FF2. The switching device SW is connected in series to the primary winding L1 of the transformer TR to control the current I1 flowing through the primary winding L1.

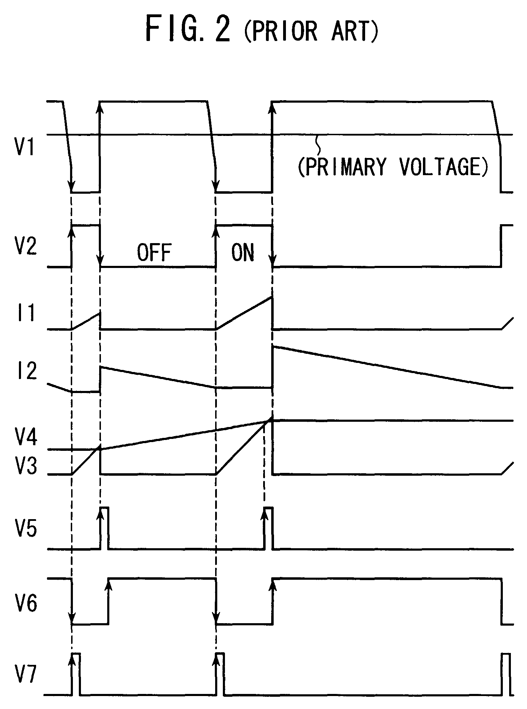

The behavior of a switching power supply configured as described above is shown in the timing chart of FIG. 2.

If the current I1 (voltage signal V3) flowing through the switching device SW for applying a voltage to the primary winding L1 reaches the current control signal V4, the output signal V5 of the second comparator CSCMP changes to a high state and the output V2 of the second flip-flop circuit FF2 changes from a high state to a low state to turn off the switching device SW. That is, the switching device SW remains turned on until the current flowing through the switching device SW reaches the current control signal V4, whereby magnetic flux energy is accumulated in the transformer TR.

If the switching device SW turns off, the magnetic flux energy accumulated in the transformer TR is supplied to the load Z through the secondary winding L2, rectifying diode D, etc. as a load current.

If the magnetic flux energy in the transformer TR becomes depleted as time elapses, the voltage of the secondary winding L2 drops rapidly to fall below the reference voltage Vt1. Consequently, the output signal V6 of the first comparator TRCMP goes low and the output signal V7 of the first flip-flop circuit FF1 goes high, thereby causing the output signal V2 of the second flip-flop circuit FF2 to change to a high state. This in turn causes the switching device SW to turn on.

If the switching device SW turns on, the current I1 flowing through the switching device SW (voltage signal V3) continues to rise until it once again reaches the current control signal V4.

In this way, the switching power supply repeats the above-noted operation to sustain self-excited oscillation.

This means self-excited oscillation in the prior art switching power supply is based on the mechanism wherein energy accumulated in the transformer TR is controlled by switching on and off the switching device SW according to the difference between the voltage detected on the secondary winding L2 side and the reference voltage Vt1.

It should be noted here that in such a switching power supply as described above, the current supplied to the load is in principle inversely proportional to the oscillation frequency. This is because energy exchanged with the transformer TR at each cycle also reduces if the amount of current supplied to the load decreases, resulting in a shorter time interval at which the switching device SW turns on and off.

If the on-off time interval of the switching device SW shortens, the frequency of self-excited oscillation increases. This could cause such problems as a power loss in the switching device SW, a core loss in the transformer TR, an increase in noise, and a failure in oscillation. An excess increase in the oscillation frequency therefore must be prevented. For this purpose the minimum load is fixed using a bleeder resistor in some cases. This could cause the problem, however, that the power consumption of the switching power supply itself increases under a small to no load, as the result of increases in the above-mentioned losses and losses in other parts of the switching power supply due to a frequency rise. Consequently, it becomes increasingly difficult to reduce the power consumed by the switching power supply.

The question that remains unsolved with regard to the switching power supply, therefore, is how to prevent the on-off time interval of the switching device SW from shortening more or less under a small to no load and thereby avoid any excess increase in the frequency of self-excited oscillation.

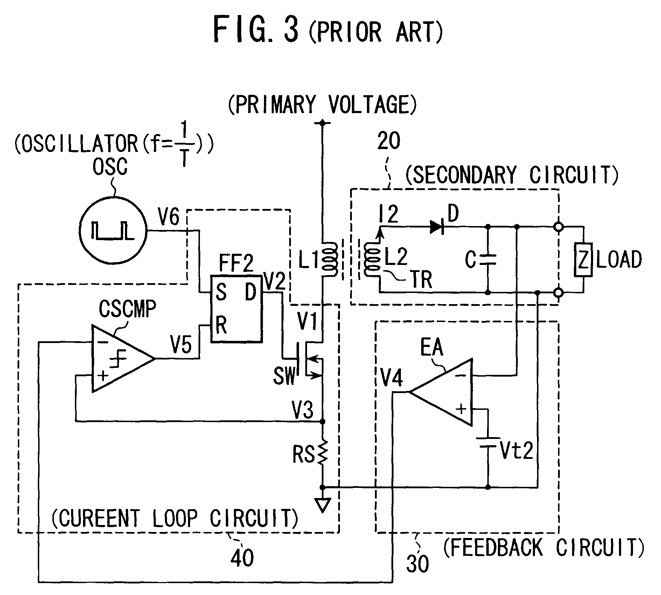

It is indeed possible to prevent an increase in the switching frequency by providing the switching power supply with an oscillator OSC for outputting a fixed-frequency pulse signal (signal of high- and low-state pulses, i.e., on-off signal) as shown in FIG. 3, rather than with the magnetic flux detector 10. Further power saving is required, however, even when the switching power supply is under a small to no load.

## SUMMARY OF THE INVENTION

The object of the present invention is to solve the above-mentioned problems by providing a switching power supply according to the present invention, in which the switching power supply is defined as:

(1) A switching power supply comprising:

a transformer including a primary winding to which a dc current is applied by turning on and off a switching device and a secondary winding for supplying the induced energy to a load;
an on-state control circuit for turning on the switching device by means of a voltage signal induced at the secondary winding; and
an off-state control circuit for turning off the switching device by producing a current control signal from the output voltage of the secondary winding and a reference voltage and comparing the current control signal with a current flowing through the primary winding by means of a comparator,
wherein the switching power supply is further provided with a delay circuit for prolonging the time at which the switching device makes an off-to-on transition.

(2) The switching power supply of definition 1, wherein the delay circuit includes:

a comparator having hysteresis characteristics and serving as an alternative to the comparator mentioned earlier;
a gate circuit to which the inverted output of the comparator and a signal associated with a voltage induced at the secondary winding are input and whereby an input signal to the reset terminal of a flip-flop circuit, which is mentioned later, is given priority over an input signal to the set terminal of the flip-flop circuit; and
a flip-flop circuit wherein the output of the gate circuit is supplied to the set input terminal of the flip-flop circuit and the output of the comparator is supplied to the reset input terminal of the flip-flop circuit, thereby controlling the switching device.

(3) A switching power supply comprising:

a transformer including a primary winding to which a dc current is applied by turning on and off a switching device and a secondary winding for supplying the induced energy to a load;
a magnetic flux detector for detecting magnetic flux induced at the secondary winding as a voltage signal and outputting an on-state signal to the switching device if the voltage signal is smaller than a reference signal;
a feedback circuit for comparing a voltage supplied to the load with a given voltage and feeding back the difference as a current control signal; and
a current loop circuit for performing the on-off control of the switching device according to an on-state signal output by the magnetic flux detector and a current control signal output by the feedback circuit,
wherein the current loop circuit includes
a comparator that has hysteresis characteristics and compares the current control signal with a current flowing through the primary winding; and
a flip-flop circuit having a gate circuit wherein the on-state signal of the magnetic flux detector is supplied to the set input terminal of the flip-flop circuit and the output of the comparator is supplied to the reset terminal of the flip-flop circuit, whereby the reset input terminal is given priority over the set input terminal.

(4) The switching power supply of definition 3, wherein the gate circuit is given an input of the inverted output of the comparator and a signal associated with a voltage induced at the secondary winding, the output of the gate circuit being supplied to the set input terminal of the flip-flop circuit. The switching power supply in this definition of the present invention is designed to prevent any excess increase in the frequency of self-excited oscillation under a small to no load by employing so-called burst operation.

(5) The switching power supply of definition 3 or 4, wherein the gate circuit is given an input of the inverted output of the comparator and a signal associated with a voltage induced at the secondary winding, the output of the gate circuit being supplied to the set input terminal of the flip-flop circuit.

## BRIEF DESCRIPTION OF THE DRAWINGS

FIG. 1 is a schematic circuit diagram of a prior art switching power supply.
FIG. 2 is a timing chart showing the behaviors of individual circuits in the circuit diagram of FIG. 1.
FIG. 3 is a schematic circuit diagram of another prior art switching power supply.
FIG. 4 is a schematic circuit diagram showing the features of the switching power supply according to the present invention.
FIG. 5 shows the characteristics of a comparator having hysteresis indicated In the circuit diagram of FIG. 4.
FIG. 6 is a timing chart showing the behaviors of individual circuits in the circuit diagram of FIG. 3.
FIG. 7 is a schematic graph showing a difference between a case when the comparator has hysteresis and a case when the comparator has no hysteresis.
FIG. 8 is a graph showing the relationship between a current control signal from an error amplifier and a current I1 in a primary winding.
FIG. 9 is a circuit diagram showing the features of one embodiment of the switching power supply according to the present invention.
FIG. 10 is a timing chart showing the behaviors of individual circuits in the circuit diagram of FIG. 9.

## DETAILED DESCRIPTION OF THE PREFERRED EMBODIMENTS

Preferred embodiments of the switching power supply according to the present invention will now be described in detail with reference to the accompanying drawings. Elements that are the same as those discussed in the Description of the Prior Art section are given the same references and not described in detail here since their behaviors are also identical.

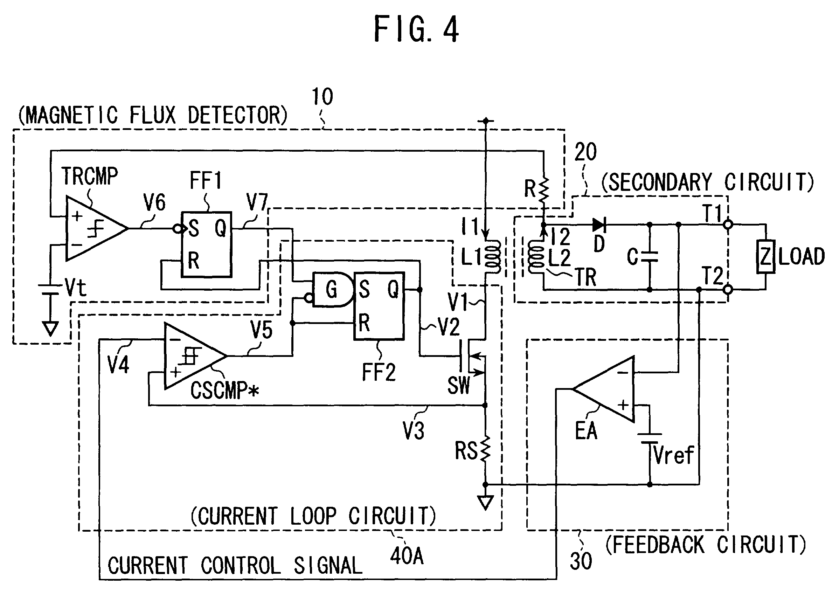

FIG. 4 shows one embodiment of the switching power supply according to the present invention.

A characteristic of the switching power supply in the embodiment of this figure is that it is provided with a gate G for receiving the output V7 of the first flip-flop circuit FF1 to allow an input to the set input terminal S to precede an input to the reset input terminal R of the second flip-flop circuit FF2, and with a comparator CSCMP* having hysteresis characteristics as an alternative to the second comparator CSCMP placed in the current loop circuit 40.
In virtue of the gate G, the reset input of the second flip-flop circuit FF2 takes precedence whenever the set input conflicts with the reset input. Thus the output Q of the second flip-flop circuit FF2 always goes low in the event of a set-reset conflict.

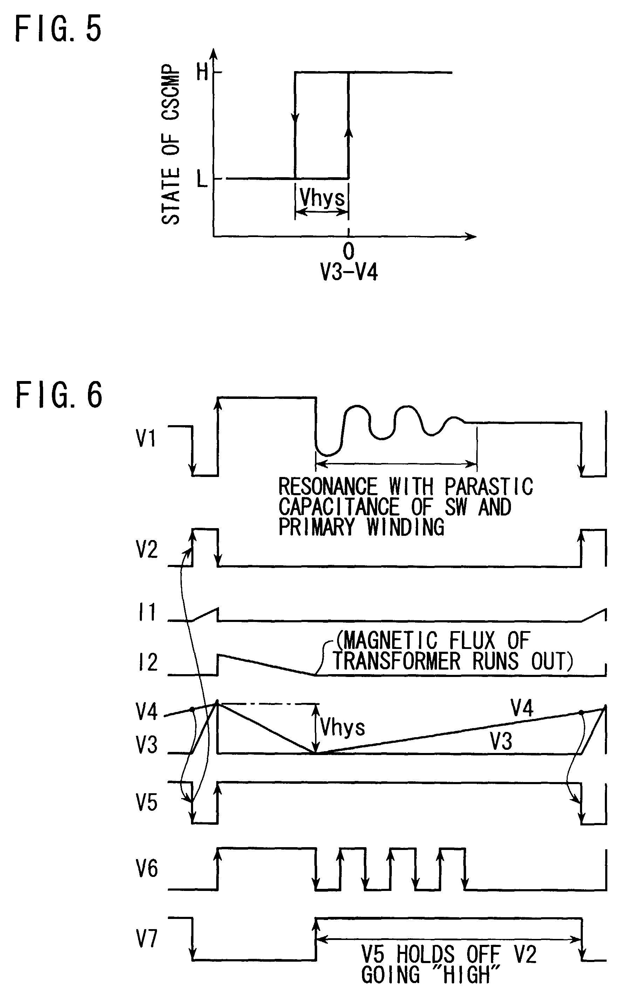

FIG. 5 shows the hysteresis characteristics of the comparator CSCMP*.
As shown in FIG. 5, the comparator CSCMP* operates in such a manner that:

(a) the threshold follows the path (width: Vhys) on the right-hand side of the figure when a differential voltage V3-V4 resulting from a difference between an input V3 to the non-inverting input terminal (+) and an input V4 to an inverting input terminal (-) rises, whereas
(b) the threshold follows the path (width: Vhys) on the left-hand side of the figure when the differential voltage V3-V4 falls.

That is, a characteristic of the switching power supply is that the comparator CSCMP* is given a certain time lag by virtue of the hysteresis characteristics thereof so that the output signal V5 being in a high state does not immediately change to a low state. Consequently, the interval at which the switching device SW turns on and off is prolonged so as to suppress the oscillation frequency of the switching power supply.
Referring back to FIG. 4, the switching power supply is designed to operate in two modes, one of which is normal operation and the other is burst operation under a small to no load. The normal mode is no different from that of the prior art switching power supply described in FIGS. 1 and 2 and therefore excluded from the following explanation. Accordingly, the explanation covers only the burst operation under a small to no load which is characteristic of the switching power supply according to the present invention.
As shown in FIG. 6, the burst operation according to the present invention is identical to the operation of the prior art switching power supply discussed in the Description of the Prior Art section in that the transformer TR is energized by turning on the switching device SW and then the switching device SW is turned off to induce energy in the secondary circuit 20.
The circuit of the switching power supply according to the present invention differs from that of the prior art switching power supply, however. In the circuit of the prior art switching power supply, the on-state period of the switching device SW begins immediately after the magnetic flux accumulated in the transformer TR becomes depleted. In contrast, in the circuit of the switching power supply according to the present invention shown in FIG. 4, the time interval of the off-to-on transition of the switching device SW is prolonged to some degree.

The reason for this prolongation is as follows. The depletion of magnetic flux in the transformer TR is detected and memorized by the magnetic flux detector 10, in an attempt to immediately turn on the switching device SW by setting the second flip-flop circuit FF2 through activation of the first flip-flop circuit FF1. However, since the comparator CSCMP* having hysteresis characteristics continues to hold the output thereof high as long as the time required for the current control signal V4 to rise by as much as determined by the hysteresis width Vhys, the reset state of the second flip-flop circuit FF2 is not cancelled for reasons of the action taken by the gate G. Consequently, the output signal V2 of the second flip-flop circuit FF2 remains high for a while.

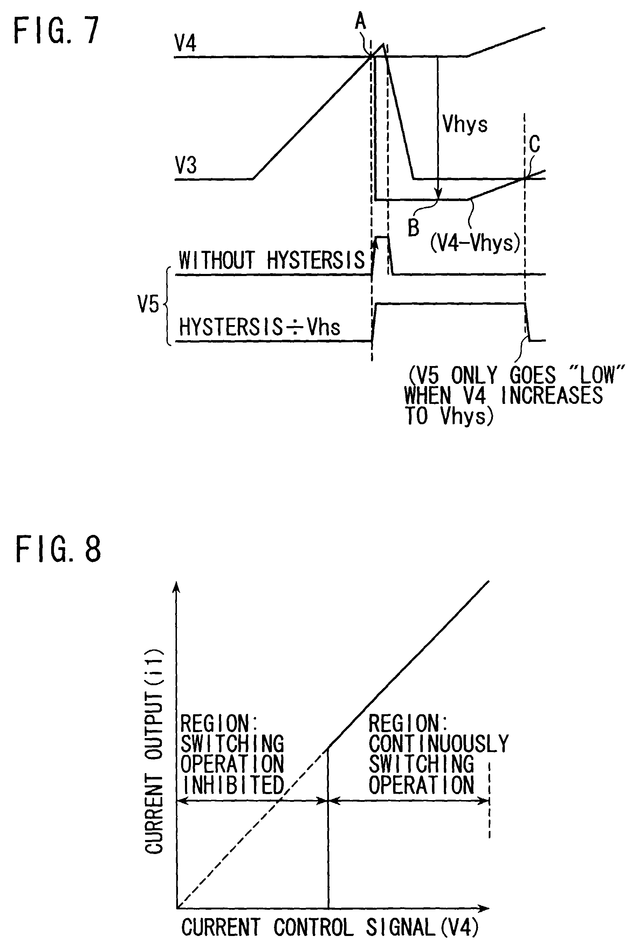

This means the threshold voltage V4 of the comparator CSCMP* is at a point A during the on-state period of the switching device SW, as shown in FIG. 7. Consequently, the reset signal V5 goes high in the event that the signal V3 becomes greater than the V4 (point A).

Once the output signal V2 of the second flip-flop circuit FF2 goes low upon a state transition in the reset signal V5, the switching device SW turns off and the signal V3 drops rapidly. Consequently, the reset signal V5 immediately goes low if the comparator CSCMP* has no hysteresis at all.

If the comparator CSCMP* has hysteresis, as it does in the case of the switching power supply according to the present invention, the signal V5 does not go back to a low state until V3 < (V4 - Vhys) holds true (point B). If the current control signal V4 is smaller than (V3 + Vhys), the signal V5 remains high. Consequently, the output signal V2 of the second flip-flop circuit FF2 remains low. If this condition continues for a while, the voltage on the load side falls and the error amplifier EA raises the level of its output signal V4. Consequently, the relationship between the inputs of the comparator CSCMP* satisfies the condition V3 < (V3 + Vhys) (point C), which in turn cancels the reset signal V5 and allows the output of the second flip-flop circuit FF2 to go low.

However, since the set signal V7 of the first flip-flop circuit FF1 is kept applied even after the depletion of magnetic flux in the transformer TR is detected, the output signal V2 of the second flip-flop circuit FF2 changes to a high state, thus bringing one cycle to an end.

As described above, the switching power supply operates in the burst mode in which there is a short pause after the depletion of magnetic flux in the transformer TR. Consequently, the operating frequency at which the switching device SW turns on and off is reduced. Furthermore, there is no pulse signal produced for the levels of a current control signal that satisfy the condition V4 < Vhys. This means continuous oscillation occurs only when the load is equal to or greater than the value that satisfies the condition V4 = Vhys . Consequently, an increase in the oscillation frequency under a small to no load is limited to values equal to or smaller than the value of the above-mentioned load condition.

FIG. 8 shows the relationship between the current control signal of the current loop circuit 40 and the current output per pulse. It may be quite reasonable to conclude that a limit has been placed on the minimum value of the current output as the result of using the comparator CSCMP* having hysteresis. This means the switching power supply operates in such a manner that a current supplied to the load Z is regulated by thinning the density of pulses by means of negative feedback action under the load condition corresponding to values smaller than the minimum value, i.e., under a small to no load condition. Furthermore, continuous oscillation occurs only under a load condition corresponding to values greater than the minimum value. This means a limit has also been placed on the frequency rise.

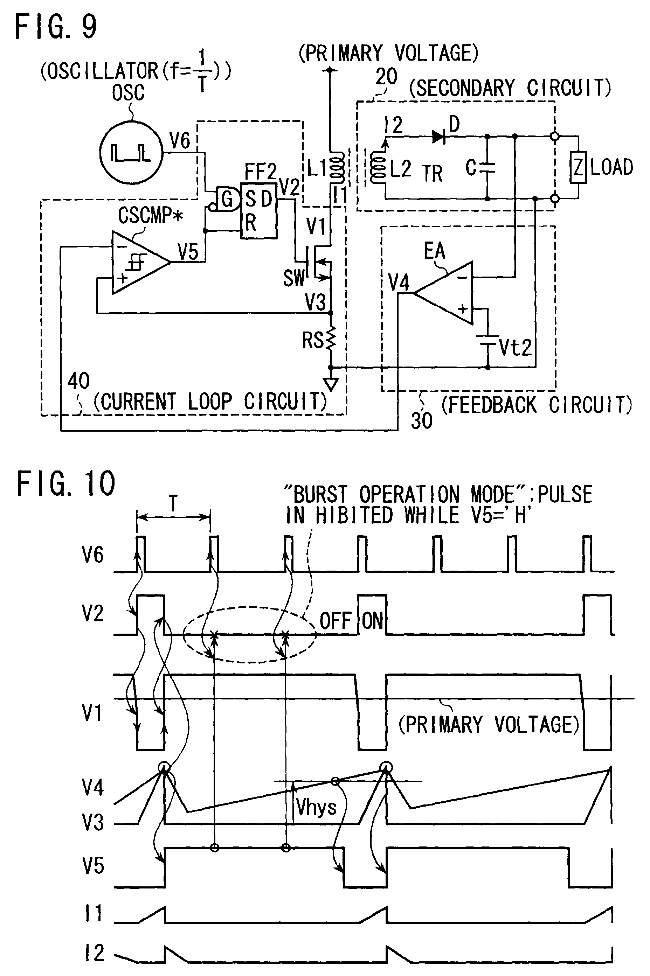

Furthermore, in the embodiment of FIG. 9 wherein an oscillator OSC for producing a fixed-frequency pulse signal (signal of high- and low-state pulses, i.e., on-off signal) is used in place of the magnetic flux detector 10, it is possible to obtain the same effect as can be obtained in the embodiment of FIG. 4. The embodiment of FIG. 9 is not discussed in detail here, however.

FIG. 10 is a timing chart illustrating the behavior of the circuit diagram shown in FIG. 9. The behavior is basically the same as that illustrated in the timing chart of FIG. 6. At a point A or B in FIG. 7, the voltage signal V5 goes high and the switching power supply goes into the burst mode operation, thereby prohibiting the signal V2 from going high (on-state).

## ADVANTAGEOUS EFFECTS OF THE INVENTION

As described above, the switching power supply according to the present invention offers the advantage that by virtue of the hysteresis characteristics of a comparator in a current loop circuit, the amount of current that can be turned on through a switching device is limited to values greater than the minimum value determined by the amount of hysteresis. Consequently, a limit is also placed on the maximum operating frequency.

Another advantage is that by virtue of feedback-loop action that attempts to maintain equilibrium between the load current and the current transferred by a transformer, the switching power supply transitions to burst mode operation when there is only a small load, or no load at all. This therefore makes it possible to decrease the frequency at which the switching device turns on and off.

Accordingly, the switching power supply according to the present invention is advantageous in that power losses occurring in individual parts of the switching power supply as the result of an increase in the oscillation frequency at which the switching device is turned on and off can be effectively reduced; the burst frequency, maximum oscillation frequency and points at which a transition is made to the burst mode operation can be determined by the amount of hysteresis; and the power supply design can be simplified while maintaining the freedom of design.

**Claims**

1. A switching power supply comprising:

   a transformer including a primary winding to which a dc current is applied by turning on and off a switching device and a secondary winding for supplying the induced energy to a load;
   an on-state control circuit for turning on said switching device by means of a voltage signal induced at said secondary winding; and
   an off-state control circuit for turning off said switching device by producing a current control signal from the output voltage of said secondary winding and a reference voltage and comparing said current control signal with a current flowing through said primary winding by means of a comparator,
   wherein said switching power supply is further provided with a delay circuit for prolonging the time at which said switching device makes an off-to-on transition.

2. The switching power supply of claim 1, wherein said delay circuit includes:

   a comparator having hysteresis characteristics and serving as an alternative to said comparator;
   a gate circuit to which the inverted output of said comparator and a signal associated with a voltage induced at said secondary winding are input and whereby an input signal to the reset terminal of a flip-flop circuit, which is mentioned later, is given priority over an input signal to the set terminal of said flip-flop circuit; and
   a flip-flop circuit wherein the output of said gate circuit is supplied to the set input terminal of said flip-flop circuit and the output of said comparator is supplied to the reset input terminal of said flip-flop circuit, thereby controlling said switching device.

3. A switching power supply comprising:

   a transformer including a primary winding to which a dc current is applied by turning on and off a switching device and a secondary winding for supplying the induced energy to a load;
   a magnetic flux detector for detecting magnetic flux induced at said secondary winding as a voltage signal and outputting an on-state signal to said switching device if said voltage signal is smaller than a reference signal;
   a feedback circuit for comparing a voltage supplied to said load with a given voltage and feeding back the difference as a current control signal; and
   a current loop circuit for performing the on-off control of said switching device according to an on-state signal output by said magnetic flux detector and a current control signal output by said feedback circuit,
   wherein said current loop circuit includes
   a comparator that has hysteresis characteristics and compares said current control signal with a current flowing through said primary winding; and
   a flip-flop circuit having a gate circuit wherein the on-state signal of said magnetic flux detector is supplied to the set input terminal of said flip-flop circuit and the output of said comparator is supplied to the reset terminal of said flip-flop circuit, whereby said reset input terminal is given priority over said set input terminal.

4. The switching power supply of claim 3, wherein said gate circuit is given an input of the inverted output of said comparator and a signal associated with a voltage induced at said secondary winding, the output of said gate circuit being supplied to the set input terminal of said flip-flop circuit.

5. The switching power supply of claim 3 or 4, wherein said gate circuit is given an input of the inverted output of said comparator and a signal associated with a voltage induced at said secondary winding, the output of said gate circuit being supplied to the set input terminal of said flip-flop circuit.

# FIG. 1 (PRIOR ART)

(MAGNETIC FLUX DETECTOR) 10 (PRIMARY VOLTAGE)

TRCMP V6 FF1 V7

S Q

R

Vt1

V4 V5

CSCMP

FF2 V3 SW

R2

R1 20

(SECONDARY CIRCUIT)

I1 I2 P

L1 L2 C Z LOAD

TR

V2 V1

S Q

R

EA Vt2

(CURRENT LOOP CIRCUIT)

(FEEDBACK CIRCUIT)

30

CURRENT CONTROL SIGNAL 40

EP 1 089 420 A1

# FIG. 2 (PRIOR ART)

# FIG. 3 (PRIOR ART)

(PRIMARY VOLTAGE)

(OSCILLATOR (f=$\frac{1}{T}$))

OSC

20

(SECONDARY CIRCUIT)

V6

I2    D

FF2

L1    L2    TR

C    Z LOAD

CSCMP

S    D    V2

V1

R

EA

V5

SW

V4

V3

Vt2

RS

(CUREENT LOOP CIRCUIT)

40

30    (FEEDBACK CIRCUIT)

# FIG. 4

EP 1 089 420 A1

FIG. 5

FIG. 6

RESONANCE WITH PARASTIC
CAPACITANCE OF SW AND
PRIMARY WINDING

(MAGNETIC FLUX OF
TRANSFORMER RUNS OUT)

V5 HOLDS OFF V2
GOING "HIGH"

FIG. 7

V4

V3

A

Vhys

C

B    (V4-Vhys)

WITHOUT HYSTERSIS

V5 {

HYSTERSIS ÷ Vhs

(V5 ONLY GOES "LOW"
WHEN V4 INCREASES
TO Vhys)

FIG. 8

CURRENT OUTPUT (i1)

REGION:
SWITCHING
OPERATION
INHIBITED

REGION:
CONTINUOUSLY
SWITCHING
OPERATION

CURRENT CONTROL SIGNAL (V4)

# FIG. 9

(OSCILLATOR (f=$\frac{1}{T}$))
OSC

(PRIMARY VOLTAGE)

20 (SECONDARY CIRCUIT)

V6

FF2
G | S D
R

V2

CSCMP*

V5

L1
I1

I2      D
L2  TR   C      Z LOAD

V1

SW

V3

RS

EA

V4

Vt2

40 (CURRENT LOOP CIRCUIT)

30 (FEEDBACK CIRCUIT)

# FIG. 10

"BURST OPERATION MODE"; PULSE INHIBITED WHILE V5='H'

T

V6

V2        OFF | ON

V1        (PRIMARY VOLTAGE)

V4
V3        Vhys

V5

I1

I2

EP 1 089 420 A1

**European Patent Office**

# EUROPEAN SEARCH REPORT

**Application Number**

EP 00 11 8682

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,P | US 5 991 172 A (JOVANOVIC MILAN M ET AL) 23 November 1999 (1999-11-23) | 1 | H02M3/335 |
| A,P | * the whole document * | 2-5 | |
| A | US 5 612 858 A (WEINMEIER HARALD ET AL) 18 March 1997 (1997-03-18) * the whole document * | 1-5 | |
| A | EP 0 583 038 A (PHILIPS ELECTRONICS NV) 16 February 1994 (1994-02-16) * the whole document * | 1-5 | |
| A | US 5 912 552 A (TATEISHI TETSUO) 15 June 1999 (1999-06-15) * the whole document * | 1-5 | |
| | | | **TECHNICAL FIELDS SEARCHED (Int.Cl.7)** |
| | | | H02M |

The present search report has been drawn up for all claims

| Place of search | Date of completion of the search | Examiner |
|---|---|---|
| THE HAGUE | 5 February 2001 | Thisse, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

## ANNEX TO THE EUROPEAN SEARCH REPORT
## ON EUROPEAN PATENT APPLICATION NO.

EP 00 11 8682

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2001

| Patent document cited in search report | | Publication date | Patent family member(s) | | Publication date |
|---|---|---|---|---|---|
| US 5991172 | A | 23-11-1999 | US | 5757626 A | 26-05-1998 |
| | | | GB | 2314431 A,B | 24-12-1997 |
| US 5612858 | A | 18-03-1997 | AT | 403535 B | 25-03-1998 |
| | | | AT | 194693 A | 15-07-1997 |
| | | | AT | 154179 T | 15-06-1997 |
| | | | DE | 59403052 D | 10-07-1997 |
| | | | WO | 9509476 A | 06-04-1995 |
| | | | EP | 0721692 A | 17-07-1996 |
| EP 0583038 | A | 16-02-1994 | NL | 9201428 A | 01-12-1992 |
| | | | JP | 6165491 A | 10-06-1994 |
| | | | US | 5469349 A | 21-11-1995 |
| US 5912552 | A | 15-06-1999 | JP | 10225105 A | 21-08-1998 |

EPO FORM P0459

For more details about this annex : see Official Journal of the European Patent Office, No. 12/82